# EUROPEAN PATENT APPLICATION

(11) **EP 4 819 470 A1**
(43) Date of publication of application: **07.10.2026**
(21) Application number: 25744412.5
(22) Date of filing: 02.01.2025
(51) Int. Cl.: H02M 3/00, H02M 1/32, H02M 7/42, H02M 3/156, H02M 3/158, H02J 3/38

(54) **POWER CONVERSION APPARATUS AND CONTROL METHOD THEREFOR**

(30) Priority: 27.01.2024 CN 202410120548
(71) Applicant: Huawei Digital Power Technologies Co., Ltd., Shenzhen, Guangdong 518043 (CN)
(72) Inventor: WANG, Yu, Shenzhen, Guangdong 518043 (CN); YANG, Boping, Shenzhen, Guangdong 518043 (CN); KUANG, Yuanjun, Shenzhen, Guangdong 518043 (CN); HUANG, Jiechun, Shenzhen, Guangdong 518043 (CN)
(74) Representative: Maiwald GmbH
(86) International application number: PCT/CN2025/070298
(87) International publication number: WO 2025/156966

(57) **Abstract**

This application provides a power conversion apparatus and a control method thereof. The power conversion apparatus includes a first DC/DC conversion circuit, a second DC/DC conversion circuit, a DC/AC conversion circuit, and a controller. Outputs of the first DC/DC conversion circuit and the second DC/DC conversion circuit are connected in parallel to each other. When the power conversion apparatus switches from a non-power-limited state to a power-limited state, the controller adjusts an input voltage of the first DC/DC conversion circuit to a first voltage and adjusts an input voltage of the second DC/DC conversion circuit to a second voltage, to reduce both an input power of the first DC/DC conversion circuit and an input power of the second DC/DC conversion circuit. The first voltage is greater than the input voltage of the first DC/DC conversion circuit when the power conversion apparatus is in the non-power-limited state, and the second voltage is greater than the input voltage of the second DC/DC conversion circuit when the power conversion apparatus is in the non-power-limited state. In this way, an electric energy yield of the power conversion apparatus can be increased.

## Description

This application claims priority to Chinese Patent Application No.202410120548.3, filed with the China National Intellectual Property Administration on January 27, 2024 and entitled "POWER CONVERSION APPARATUS AND CONTROL METHOD THEREOF", which is incorporated herein by reference in its entirety.

### TECHNICAL FIELD

This application relates to the field of power supply technologies, and in particular, to a power conversion apparatus and a control method thereof.

### BACKGROUND

In scenarios such as irregular rooftop areas, there are different quantities of photovoltaic modules in different photovoltaic strings connected to a photovoltaic inverter. As a result, when the photovoltaic inverter switches from a non-power-limited state to a power-limited state, the photovoltaic inverter experiences additional power limiting due to different output voltages of different photovoltaic strings, leading to a reduction in an electric energy yield of the photovoltaic inverter.

### SUMMARY

This application provides a power conversion apparatus and a control method thereof, to prevent additional power limiting on the power conversion apparatus, therefore increasing an electric energy yield of the power conversion apparatus.

According to a first aspect, this application provides a power conversion apparatus. The power conversion apparatus includes a first DC/DC conversion circuit, a second DC/DC conversion circuit, a DC/AC conversion circuit, and a controller. Both an input of the first DC/DC conversion circuit and an input of the second DC/DC conversion circuit are configured to connect to a photovoltaic module, an output of the first DC/DC conversion circuit and an output of the second DC/DC conversion circuit are connected in parallel to each other and then connected to an input of the DC/AC conversion circuit, and an output of the DC/AC conversion circuit is configured to connect to an alternating-current power grid. The controller is configured to: when the power conversion apparatus switches from a non-power-limited state to a power-limited state, adjust an input voltage of the first DC/DC conversion circuit to a first voltage and adjust an input voltage of the second DC/DC conversion circuit to a second voltage, to reduce both an input power of the first DC/DC conversion circuit and an input power of the second DC/DC conversion circuit. The first voltage is greater than the input voltage of the first DC/DC conversion circuit when the power conversion apparatus is in the non-power-limited state, and the second voltage is greater than the input voltage of the second DC/DC conversion circuit when the power conversion apparatus is in the non-power-limited state.

In this implementation, when the power conversion apparatus switches from the non-power-limited state to the power-limited state, both the input voltages of the first DC/DC conversion circuit and the second DC/DC conversion circuit are adjusted to a higher voltage value, to correspondingly reduce an input power of the power conversion apparatus when an output power of the power conversion apparatus is reduced due to power limiting. In this way, an input voltage of the DC/AC conversion circuit can be increased to a small extent when the power conversion apparatus is in the power-limited state, preventing the power conversion apparatus from experiencing additional power limiting, and increasing an electric energy yield of the power conversion apparatus.

With reference to the first aspect, in a first possible implementation, when the power conversion apparatus is in the non-power-limited state, the input voltage of the first DC/DC conversion circuit is different from the input voltage of the second DC/DC conversion circuit. The controller is configured to: when the power conversion apparatus switches from the non-power-limited state to the power-limited state, adjust the input voltage of the first DC/DC conversion circuit to the first voltage, adjust the input voltage of the second DC/DC conversion circuit to the second voltage, and make a difference between the second voltage and the first voltage less than a difference between the input voltages of the second DC/DC conversion circuit and the first DC/DC conversion circuit when the power converter is in the non-power-limited state.

In this implementation, in a scenario in which open-circuit voltages of a plurality of photovoltaic modules connected to the power conversion apparatus are different, the power conversion apparatus controls the input voltages of the first DC/DC conversion circuit and the second DC/DC conversion circuit to implement voltage sharing, to correspondingly reduce the input power of the power conversion apparatus when the output power of the power conversion apparatus is reduced due to power limiting. In this way, an extent to which the input voltage of the DC/AC conversion circuit is increased when the input power of the power conversion apparatus is correspondingly reduced is minimized, preventing the power conversion apparatus from experiencing additional power limiting, and increasing the electric energy yield of the power conversion apparatus.

With reference to the first aspect, in a second possible implementation, when the power conversion apparatus is in the non-power-limited state, the input voltage of the first DC/DC conversion circuit is the same as the input voltage of the second DC/DC conversion circuit. The controller is configured to: when the power conversion apparatus switches from the non-power-limited state to the power-limited state, adjust the input voltage of the first DC/DC conversion circuit to the first voltage, adjust the input voltage of the second DC/DC conversion circuit to the second voltage, and make a difference between the second voltage and the first voltage consistent with a difference between the input voltages of the second DC/DC conversion circuit and the first DC/DC conversion circuit when the power converter is in the non-power-limited state.

In this implementation, in a scenario in which open-circuit voltages of a plurality of photovoltaic modules connected to the power conversion apparatus are close and output currents are different, the power conversion apparatus controls the input voltages of the first DC/DC conversion circuits and the second DC/DC conversion circuits to implement voltage sharing, to correspondingly reduce the input power of the power conversion apparatus when the output power of the power conversion apparatus is reduced due to power limiting. In this way, an extent to which the input voltage of the DC/AC conversion circuit is increased when the input power of the power conversion apparatus is correspondingly reduced is minimized, preventing the power conversion apparatus from experiencing additional power limiting, and increasing the electric energy yield of the power conversion apparatus.

With reference to any one of the first aspect to the second possible implementation of the first aspect, in a third possible implementation, the controller is configured to: adjust a target input voltage of the first DC/DC conversion circuit to the first voltage and adjust a target input voltage of the second DC/DC conversion circuit to the second voltage, to adjust the input voltage of the first DC/DC conversion circuit to the first voltage and adjust the input voltage of the second DC/DC conversion circuit to the second voltage.

According to a second aspect, this application provides a control method of a power conversion apparatus. The method includes: when the power conversion apparatus switches from a non-power-limited state to a power-limited state, adjusting an input voltage of a first DC/DC conversion circuit to a first voltage and adjusting an input voltage of a second DC/DC conversion circuit to a second voltage, to reduce both an input power of the first DC/DC conversion circuit and an input power of the second DC/DC conversion circuit. The first voltage is greater than the input voltage of the first DC/DC conversion circuit when the power conversion apparatus is in the non-power-limited state, and the second voltage is greater than the input voltage of the second DC/DC conversion circuit when the power conversion apparatus is in the non-power-limited state. The method is applicable to the power conversion apparatus, the power conversion apparatus includes the first DC/DC conversion circuit, the second DC/DC conversion circuit, and the DC/AC conversion circuit. Both an input of the first DC/DC conversion circuit and an input of the second DC/DC conversion circuit are configured to connect to a photovoltaic module, an output of the first DC/DC conversion circuit and an output of the second DC/DC conversion circuit are connected in parallel to each other and then connected to an input of the DC/AC conversion circuit, and an output of the DC/AC conversion circuit is configured to connect to an alternating-current power grid.

With reference to the second aspect, in a first possible implementation, when the power conversion apparatus is in the non-power-limited state, the input voltage of the first DC/DC conversion circuit is different from the input voltage of the second DC/DC conversion circuit. When the power conversion apparatus switches from the non-power-limited state to the power-limited state, the power conversion apparatus adjusts the input voltage of the first DC/DC conversion circuit to the first voltage, adjusts the input voltage of the second DC/DC conversion circuit to the second voltage, and makes a difference between the second voltage and the first voltage less than a difference between the input voltages of the second DC/DC conversion circuit and the first DC/DC conversion circuit when the power converter is in the non-power-limited state.

With reference to the second aspect, in a second possible implementation, when the power conversion apparatus is in the non-power-limited state, the input voltage of the first DC/DC conversion circuit is the same as the input voltage of the second DC/DC conversion circuit. When the power conversion apparatus switches from the non-power-limited state to the power-limited state, the power conversion apparatus adjusts the input voltage of the first DC/DC conversion circuit to the first voltage, adjusts the input voltage of the second DC/DC conversion circuit to the second voltage, and makes a difference between the second voltage and the first voltage consistent with a difference between the input voltages of the second DC/DC conversion circuit and the first DC/DC conversion circuit when the power converter is in the non-power-limited state.

With reference to any one of the second aspect to the second possible implementation of the second aspect, in a third possible implementation, the power conversion apparatus adjusts a target input voltage of the first DC/DC conversion circuit to the first voltage and adjusts a target input voltage of the second DC/DC conversion circuit to the second voltage, to adjust the input voltage of the first DC/DC conversion circuit to the first voltage and adjust the input voltage of the second DC/DC conversion circuit to the second voltage.

It should be understood that mutual reference may be made to the implementations and beneficial effects of the foregoing aspects of this application.

### BRIEF DESCRIPTION OF DRAWINGS

FIG. 1 is a diagram of an application scenario of a power conversion apparatus according to this application;
FIG. 2 is a diagram of curves of an input voltage and input power of each boost circuit according to a conventional technology;
FIG. 3 is a schematic of a structure of a power conversion apparatus according to this application;
FIG. 4 is a diagram of curves of input voltages and input powers of two DC/DC conversion circuits according to this application;
FIG. 5 is a diagram of curves of input voltages and input powers of two DC/DC conversion circuits according to this application;
FIG. 6 is a schematic of a process of generating a target input current of each DC/DC conversion circuit according to this application; and
FIG. 7 is a schematic flowchart of a control method of a power conversion apparatus according to this application.

### DESCRIPTION OF EMBODIMENTS

A power conversion apparatus provided in this application is applicable to a plurality of application fields such as the photovoltaic power generation field, the energy storage and power generation field, the new energy smart microgrid field, and the power transmission and distribution field. The power conversion apparatus provided in this application may be an inverter, a power conversion system (Power Conversion System, PCS), an uninterruptible power supply (Uninterruptible Power Supply, UPS), or the like, and is applicable to different application scenarios, for example, a photovoltaic power supply scenario, an energy storage power supply scenario, a hybrid photovoltaic energy storage power supply scenario, and a UPS power supply scenario. The following uses the photovoltaic power supply scenario as an example for description.

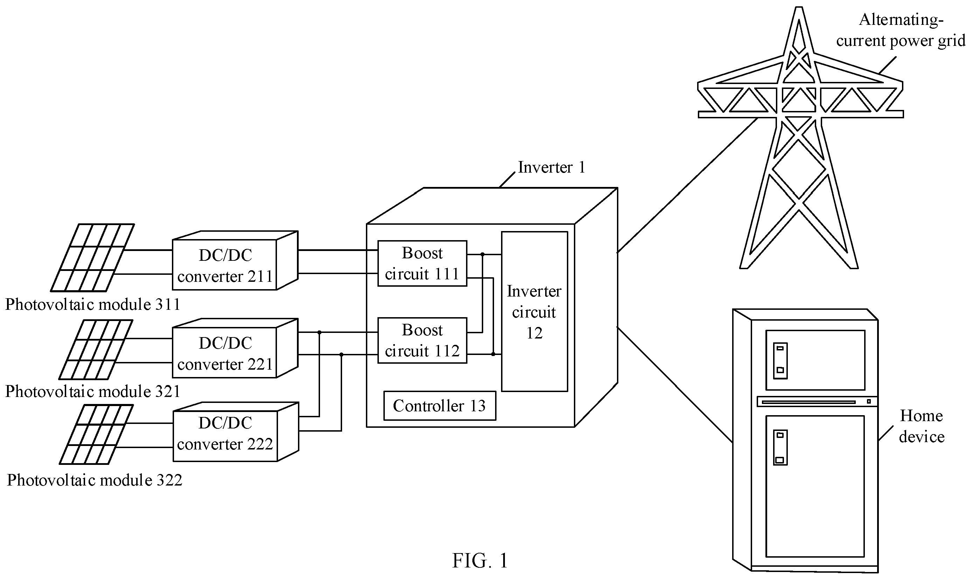

FIG. 1 is a diagram of an application scenario of a power conversion apparatus according to this application. In a photovoltaic power supply scenario, the power conversion apparatus provided in this application is an inverter 1 shown in FIG. 1. The inverter 1 includes two DC/DC conversion circuits, an inverter circuit 12, and a controller 13. The DC/DC conversion circuit includes one of a boost type, a buck type, and a buck-boost type. Herein, the DC/DC conversion circuit is the boost type for description. For example, the two boost circuits include a boost circuit 111 and a boost circuit 112. An input end of the boost circuit 111 is connected to a group of direct current input ends of the inverter 1, and then connected to a photovoltaic module 311 through a DC/DC converter 211. An input end of the boost circuit 112 is connected to another group of direct current input ends of the inverter 1. An output end of a DC/DC converter 221 and an output end of a DC/DC converter 222 are connected in parallel to the another group of direct current input ends, an input end of the DC/DC converter 221 is connected to a photovoltaic module 321, and an input end of the DC/DC converter 222 is connected to a photovoltaic module 322. An output end of the boost circuit 111 and an output end of the boost circuit 112 are connected in parallel to each other and then connected to an input end of the inverter circuit 12, and an output end of the inverter circuit 12 is connected to an alternating current output end of the inverter 1. The alternating current output end of the inverter 1 is connected to an alternating-current power grid or a home device.

After a photovoltaic power supply system that includes the inverter 1 and three DC/DC converters starts to run, each of the three DC/DC converters adjusts an output voltage of a connected photovoltaic module, to perform maximum power point tracking (Maximum Power Point Tracking, MPPT) on an output power of the photovoltaic module, so that the output power of the photovoltaic module connected to each DC/DC converter is maximized, and each DC/DC converter further performs direct current conversion on the output voltage of the photovoltaic module connected to the DC/DC converter, and outputs a direct current voltage obtained through direct current conversion to each group of direct current input ends of the inverter 1. The controller 13 in the inverter 1 controls the two boost circuits and the inverter circuit 12 to boost and invert direct current voltages of input ends of the two boost circuits and the inverter circuit 12 in sequence, and further adjusts the direct current voltages of the input ends of the two boost circuits and the inverter circuit 12, to perform MPPT on an output power of the inverter 1, so that the output power of the inverter 1 is maximized, making the inverter 1 in a non-power-limited state, to implement power supply of a plurality of types of electric devices such as the alternating-current power grid or a load.

However, when the inverter 1 switches from the non-power-limited state to a power-limited state, an input voltage of the inverter circuit 12 is increased to a greater extent due to different quantities of photovoltaic modules connected to different groups of input ends of the inverter 1. As a result, the inverter 1 experiences additional power limiting, leading to a reduction in an electric energy yield of the inverter 1.

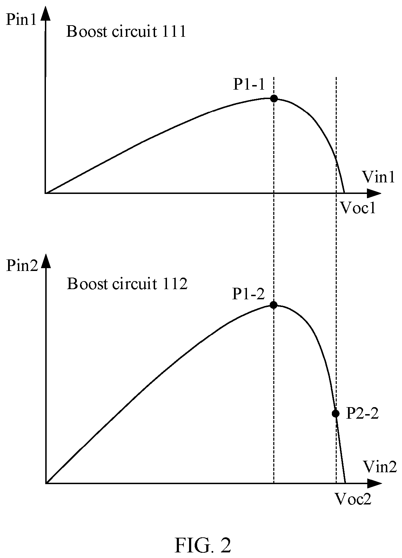

For example, as shown in FIG. 2, an open-circuit voltage Voc1 of a first photovoltaic string connected to the boost circuit 111 is close to an open-circuit voltage Voc2 of a second photovoltaic string connected to the boost circuit 112, and an output current of the second photovoltaic string is twice an output current of the first photovoltaic string. The first photovoltaic string includes the photovoltaic module 311 and the DC/DC converter 211, and the second photovoltaic string includes the photovoltaic module 321, the photovoltaic module 322, the DC/DC converter 221, and the DC/DC converter 222. When the inverter 1 is in the non-power-limited state, both the boost circuit 111 and the boost circuit 112 operate at MPPT points, that is, a point P1-1 and a point P1-2. When the inverter 1 switches from the non-power-limited state to the power-limited state, the inverter 1 adjusts current sharing of input currents of the boost circuit 111 and the boost circuit 112, to reduce both input powers of the boost circuit 111 and the boost circuit 112. In addition, a target current value for implementing current sharing of the input currents of the boost circuit 111 and the boost circuit 112 ranges between the output current of the first photovoltaic string and the output current of the second photovoltaic string. In this case, when the inverter 1 switches from the non-power-limited state to the power-limited state, a final steady-state operating point of the boost circuit 111 may still be the point P1-1, and a final steady-state operating point of the boost circuit 112 is the point P2-2. That is, only the input power of the boost circuit 112 may be reduced. As a result, an input voltage of the boost circuit 112 is increased to a great extent, and consequently, the input voltage of the inverter circuit 12 is high, and the inverter 1 experiences additional power limiting.

Based on the foregoing problem, when the inverter 1 switches from the non-power-limited state to the power-limited state, the controller 13 adjusts an input voltage of the boost circuit 111 to a first voltage and adjusts an input voltage of the boost circuit 112 to the second voltage, to reduce both the input power of the boost circuit 111 and the input power of the boost circuit 112. The first voltage is greater than an input voltage of the boost circuit 111 when the inverter 1 is in the power-limited state, and the second voltage is greater than an input voltage of the boost circuit 112 when the inverter 1 is in the power-limited state. In this case, when the inverter 1 switches from the non-power-limited state to the power-limited state, the inverter 1 adjusts the input voltages of the two boost circuits to a higher voltage value, to correspondingly reduce an input power of the inverter 1 when the output power of the inverter 1 is reduced due to power limiting. Therefore, a case in which the input voltage of the inverter circuit 12 is increased to a great extent because an input voltage of only one boost circuit is increased to a great extent due to a reduction in an input power of the boost circuit can be avoided. In this way, the input voltage of the inverter circuit 12 can be increased to a small extent when the inverter 1 is in the power-limited state, preventing the inverter 1 is prevented from experiencing additional power limiting, and increasing the electric energy yield of the inverter 1.

The foregoing is merely an example of the application scenario of the power conversion apparatus provided in this application, but is not exhaustive. The application scenario is not limited in this application.

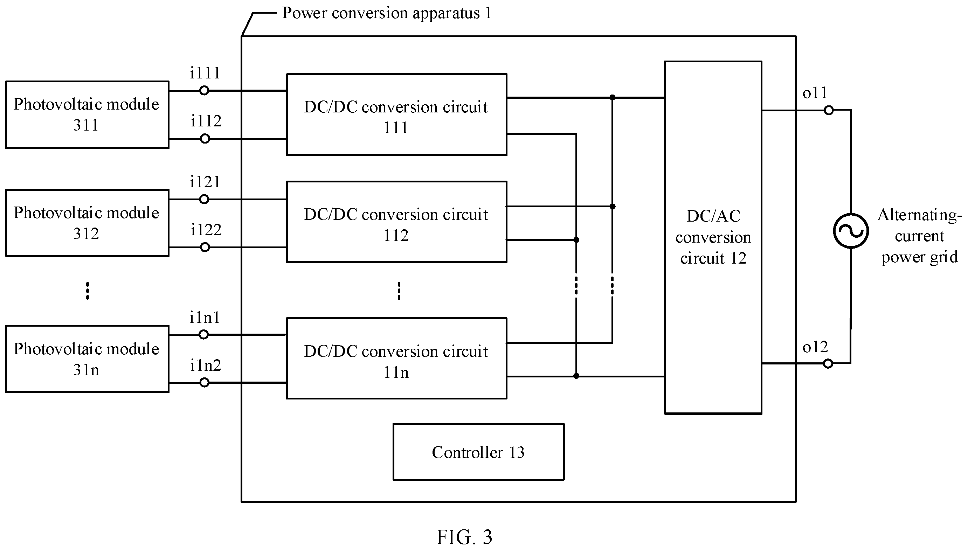

The following describes an operating principle of a power conversion apparatus provided in this application by using examples with reference to FIG. 3 to FIG. 6.

FIG. 3 is a schematic of a structure of a power conversion apparatus according to this application. As shown in FIG. 3, n groups of direct current input ends of the power conversion apparatus 1 include a first group of direct current input ends (direct current input ends i111 and i112), a second group of direct current input ends (direct current input ends i121 and i122), ..., and an n^{th} group of direct current input ends (direct current input ends i1n1 and i1n2). Alternating current output ends of the power conversion apparatus 1 include o11 and o12. The power conversion apparatus 1 includes n DC/DC conversion circuits, a DC/AC conversion circuit 12, and a controller 13. The n DC/DC conversion circuits include a DC/DC conversion circuit 111, a DC/DC conversion circuit 112, ..., and a DC/DC conversion circuit 11n, where n is an integer greater than 1. Input ends of the n DC/DC conversion circuits are configured to connect to photovoltaic modules. Specifically, input ends of the DC/DC conversion circuit 111 are connected to a photovoltaic module 311 through the direct current input ends i111 and i112 respectively, input ends of the DC/DC conversion circuit 112 are connected to a photovoltaic module 312 through the direct current input ends i121 and i122 respectively, ..., and input ends of the DC/DC conversion circuit 11n are connected to a photovoltaic module 31n through the direct current input ends i1n1 and i1n2 respectively. Output ends of the n DC/DC conversion circuits are connected in parallel to each other and then connected to input ends of the DC/AC conversion circuit 12. Output ends of the DC/AC conversion circuit 12 are configured to connect to an alternating-current power grid. Specifically, the output ends of the DC/AC conversion circuit 12 are connected to the alternating-current power grid through the alternating current output ends of the power conversion apparatus 1.

After the power conversion apparatus 1 operates, the controller 13 adjusts an output voltage of a photovoltaic module connected to each of the n DC/DC conversion circuits, to perform MPPT on an output power of the photovoltaic module. In this way, the output power of the photovoltaic module connected to each DC/DC converter is maximized, and therefore, an output power of the power conversion apparatus 1 is maximized. That is, the power conversion apparatus 1 is in a non-power-limited state. Then, when the power conversion apparatus 1 triggers a power limiting condition (for example, a device temperature of the power conversion apparatus 1 is greater than a temperature threshold or a power-limiting scheduling instruction sent by a client is received), the controller 13 controls the output power of the power conversion apparatus 1 to start to decrease, to cause the power conversion apparatus 1 to switch from the non-power-limited state to a power-limited state. When the power conversion apparatus 1 switches from the non-power-limited state to the power-limited state, the controller 13 adjusts an input voltage of the DC/DC conversion circuit 111 to a first voltage, adjusts an input voltage of the DC/DC conversion circuit 112 to a second voltage, ..., and adjusts an input voltage of the DC/DC conversion circuit 11n to an n^{th} voltage, to reduce all input powers of the n DC/DC conversion circuits. In the non-power-limited state, the power conversion apparatus 1 performs MPPT to maximize the output power of the power conversion apparatus 1. In the power-limited state, the power conversion apparatus 1 actively limits the output power of the power conversion apparatus 1. For example, photovoltaic power is greater than a maximum output power of the power conversion apparatus 1, the power conversion apparatus 1 receives power scheduling to limit the output power, or the device temperature of the power conversion apparatus 1 is excessively high and consequently limits the output power. The first voltage is greater than the input voltage of the DC/DC conversion circuit 111 when the power conversion apparatus 1 is in the non-power-limited state, the second voltage is greater than the input voltage of the DC/DC conversion circuit 112 when the power conversion apparatus 1 is in the non-power-limited state, ..., and the n^{th} voltage is greater than the input voltage of the DC/DC conversion circuit 11n when the power conversion apparatus 1 is in the non-power-limited state.

In an implementation, when the power conversion apparatus 1 is in the non-power-limited state, the input voltages of the n DC/DC conversion circuits are different.

When the power conversion apparatus 1 switches from the non-power-limited state to the power-limited state, the controller 13 adjusts a target input voltage of the DC/DC conversion circuit 111 to the first voltage, adjusts a target input voltage of the DC/DC conversion circuit 112 to the second voltage, ..., and adjusts a target input voltage of the DC/DC conversion circuit 11n to the n^{th} voltage, to adjust the input voltage of the DC/DC conversion circuit 111 to the first voltage, adjust the input voltage of the DC/DC conversion circuit 112 to the second voltage, ..., and adjust the input voltage of the DC/DC conversion circuit 11n to the n^{th} voltage; and makes a difference between any two voltages of the first voltage to the n^{th} voltage less than a difference between input voltages of two DC/DC conversion circuits corresponding to the any two voltages when the power conversion apparatus 1 is in the non-power-limited state, for example, makes a difference between the first voltage and the second voltage less than a difference between the input voltages of the DC/DC conversion circuit 111 and the DC/DC conversion circuit 112 when the power conversion apparatus 1 is in the non-power-limited state, and makes a difference between the second voltage and the n^{th} voltage less than a difference between the input voltages of the DC/DC conversion circuit 112 and the DC/DC conversion circuit 11n when the power conversion apparatus 1 is in the non-power-limited state.

Specifically, when it is ensured that an input voltage of each DC/DC conversion circuit is less than an open-circuit voltage of a photovoltaic module connected to each DC/DC conversion circuit, the controller 13 increases the input voltage of each DC/DC conversion circuit and implements voltage sharing of the input voltages of the n DC/DC conversion circuits, to correspondingly reduce an input power of the power conversion apparatus 1 when the power conversion apparatus 1 switches from the non-power-limited state to the power-limited state. It should be noted that, when a value of the input power, of the power conversion apparatus 1, that needs to be correspondingly reduced is small, that is, the first voltage to the n^{th} voltage are all less than a smallest value among open-circuit voltages of the photovoltaic modules connected to the n DC/DC conversion circuits, an absolute value of the difference between any two voltages of the first voltage to the n^{th} voltage is less than a voltage threshold. For example, the voltage threshold is a larger value between 10 V and 1% of a rated input voltage of the DC/DC conversion circuit. When the value of the input power, of the power conversion apparatus 1, that needs to be correspondingly reduced is large, for example, n=2, and when the power conversion apparatus 1 is in the non-power-limited state, the input voltage of the DC/DC conversion circuit 111 is less than the input voltage of the DC/DC conversion circuit 112. The controller 13 controls both the input voltage of the DC/DC conversion circuit 111 and the input voltage of the DC/DC conversion circuit 112 to be increased to the first voltage, where the first voltage approaches an open-circuit voltage of the photovoltaic module 311. For example, the first voltage is greater than or equal to 5% of the open-circuit voltage of the photovoltaic module 311 and is less than the open-circuit voltage of the photovoltaic module 311. In this case, an input power of the DC/DC conversion circuit 111 and an input power of the DC/DC conversion circuit 112 still need to be reduced. Therefore, the controller 13 controls the input voltage of the DC/DC conversion circuit 111 to remain at the first voltage, and controls the input voltage of the DC/DC conversion circuit 112 to continue to be increased to the second voltage. When the input voltage of the DC/DC conversion circuit 112 is increased to the second voltage, a total decrement of the input powers of the DC/DC conversion circuit 111 and the DC/DC conversion circuit 112 is equal to an upper limit of the output power of the power conversion apparatus 1 in the power-limited state.

In addition, in this application, an adjustment sequence, an adjustment rate, or a change trend of the input voltages of the n DC/DC conversion circuits (for example, both input voltages of two DC/DC conversion circuits are increased to a same voltage, or the input voltage of the DC/DC conversion circuit 111 in the two DC/DC conversion circuits is slowly increased to the first voltage, and the input voltage of the DC/DC conversion circuit 112 is first rapidly increased and then reduced to the second voltage) is not limited. In this application, that the power conversion apparatus 1 switches from the non-power-limited state to the power-limited state includes a process in which the power conversion apparatus 1 switches from the non-power-limited state to the power-limited state and a case in which the power conversion apparatus 1 has switched to the power-limited state.

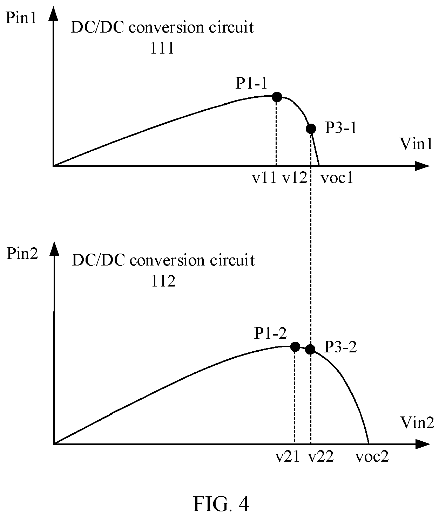

For ease of understanding, with reference to FIG. 4, the following describes a control manner of the power conversion apparatus 1 in this embodiment by using an example in which n=2, an open-circuit voltage voc1 of the photovoltaic module 311 is less than an open-circuit voltage voc2 of the photovoltaic module 312, and an output current of the photovoltaic module 311 is close to an output current of the photovoltaic module 312 with reference to a diagram of curves of input voltages and input powers of DC/DC conversion circuits shown in FIG. 4.

As shown in FIG. 4, when the power conversion apparatus 1 is in the non-power-limited state, both the DC/DC conversion circuit 111 and the DC/DC conversion circuit 112 operate at an MPPT point, that is, the DC/DC conversion circuit 111 and the DC/DC conversion circuit 112 operate at a point P1-1 and a point P1-2 respectively. In this case, the input voltage Vin1=v11 of the DC/DC conversion circuit 111 is less than the input voltage Vin2=v21 of the DC/DC conversion circuit 112. Then, when the power conversion apparatus 1 switches from the non-power-limited state to the power-limited state, the controller 13 controls the input voltage Vin1 of the DC/DC conversion circuit 111 to be increased to a first voltage v12, and controls the input voltage of the DC/DC conversion circuit 112 to be increased to a second voltage v22, that is, adjusts the DC/DC conversion circuit 111 to operate at a point P3-1 and the DC/DC conversion circuit 112 to operate at a point P3-2, to reduce both the input power of the DC/DC conversion circuit 111 and the input power of the DC/DC conversion circuit 112, to correspondingly reduce the input power of the power conversion apparatus 1 when the output power of the power conversion apparatus 1 is reduced due to power limiting. The first voltage v12 is equal to the second voltage v22.

It may be understood that, in a scenario in which a plurality of photovoltaic modules connected to the power conversion apparatus 1 are components with varying lengths, that is, in a scenario in which an open-circuit voltage of each photovoltaic module varies, the power conversion apparatus 1 controls the input voltages of the n DC/DC conversion circuits to implement voltage sharing, to correspondingly reduce the input power of the power conversion apparatus 1 when the output power of the power conversion apparatus 1 is reduced due to power limiting. In this way, an extent to which an input voltage of the DC/AC conversion circuit 12 is increased when the input power of the power conversion apparatus 1 is correspondingly reduced is minimized, preventing the power conversion apparatus 1 experiencing additional power limiting, and increasing an electric energy yield of the power conversion apparatus 1.

In another implementation, when the power conversion apparatus 1 is in the non-power-limited state, input voltages of the n DC/DC conversion circuits are the same.

When the power conversion apparatus 1 switches from the non-power-limited state to the power-limited state, the controller 13 adjusts a target input voltage of the DC/DC conversion circuit 111 to the first voltage, adjusts a target input voltage of the DC/DC conversion circuit 112 to the second voltage, ..., and adjusts a target input voltage of the DC/DC conversion circuit 11n to the n^{th} voltage, to adjust the input voltage of the DC/DC conversion circuit 111 to the first voltage, adjust the input voltage of the DC/DC conversion circuit 112 to the second voltage, ..., and adjust the input voltage of the DC/DC conversion circuit 11n to the n^{th} voltage; and makes a difference between any two voltages of the first voltage to the n^{th} voltage consistent with a difference between input voltages of two DC/DC conversion circuit corresponding to the any two voltages when the power conversion apparatus 1 is in the non-power-limited state, for example, makes a difference between the first voltage and the second voltage consistent with a difference between the input voltages of the DC/DC conversion circuit 111 and the DC/DC conversion circuit 112 when the power conversion apparatus 1 is in the non-power-limited state, and makes a difference between the second voltage and the n^{th} voltage consistent with a difference between the input voltages of the DC/DC conversion circuit 112 and the DC/DC conversion circuit 11n when the power conversion apparatus 1 is in the non-power-limited state. That the difference between the any two voltages of the first voltage to the n^{th} voltage is consistent with the difference between the input voltages of the two DC/DC conversion circuit corresponding to the any two voltages when the power conversion apparatus 1 is in the non-power-limited state means that an absolute value of a difference between the difference between the any two voltages of the first voltage to the n^{th} voltage and the difference between the input voltages of the two DC/DC conversion circuit corresponding to the any two voltages when the power conversion apparatus 1 is in the non-power-limited state is less than a voltage threshold. For example, the voltage threshold is a larger value between 10 V and 1% of a rated input voltage of the DC/DC conversion circuit.

Specifically, when it is ensured that an input voltage of each DC/DC conversion circuit is less than an open-circuit voltage of a photovoltaic module connected to each DC/DC conversion circuit, the controller 13 increases the input voltage of each DC/DC conversion circuit and implements voltage sharing of the input voltages of the n DC/DC conversion circuits, to correspondingly reduce an input power of the power conversion apparatus 1 when the power conversion apparatus 1 switches from the non-power-limited state to the power-limited state.

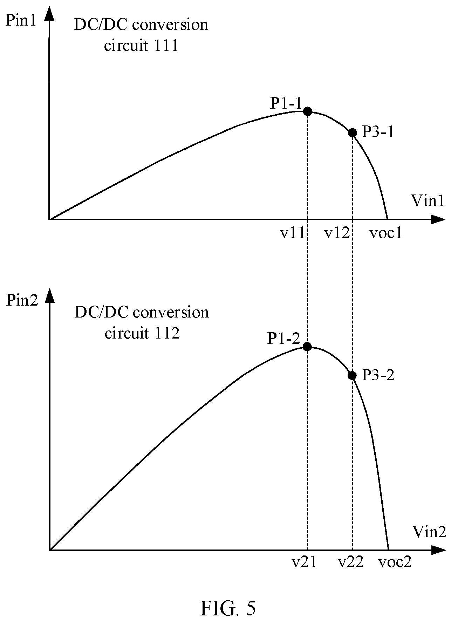

For ease of understanding, with reference to FIG. 5, the following describes a derating control manner in this embodiment by using an example in which n=2, an open-circuit voltage voc1 of the photovoltaic module 311 is close to an open-circuit voltage voc2 of the photovoltaic module 312, and an output current of the photovoltaic module 311 is less than an output current of the photovoltaic module 312 with reference to a diagram of curves of input voltages and input powers of DC/DC conversion circuits shown in FIG. 5.

As shown in FIG. 5, when the power conversion apparatus 1 is in the non-power-limited state, both the DC/DC conversion circuit 111 and the DC/DC conversion circuit 112 operate at an MPPT point, that is, the DC/DC conversion circuit 111 and the DC/DC conversion circuit 112 operate at a point P1-1 and a point P1-2 respectively. In this case, the input voltage Vin1=v11 of the DC/DC conversion circuit 111 is the same as the input voltage Vin2=v21 of the DC/DC conversion circuit 112. Then, when the power conversion apparatus 1 switches from the non-power-limited state to the power-limited state, the controller 13 controls the input voltage Vin1 of the DC/DC conversion circuit 111 to be increased to a first voltage v12, and controls the input voltage of the DC/DC conversion circuit 112 to be increased to a second voltage v22, that is, adjusts the DC/DC conversion circuit 111 to operate at a point P3-1 and the DC/DC conversion circuit 112 to operate at a point P3-2, to reduce both the input power of the DC/DC conversion circuit 111 and the input power of the DC/DC conversion circuit 112, to correspondingly reduce the input power of the power conversion apparatus 1 when the output power of the power conversion apparatus 1 is reduced due to power limiting. The first voltage v12 is equal to the second voltage v22.

It may be understood that, in a scenario in which open-circuit voltages of a plurality of photovoltaic modules connected to the power conversion apparatus 1 are close and output currents are different, the power conversion apparatus 1 controls the input voltages of the n DC/DC conversion circuits to implement voltage sharing, to correspondingly reduce the input power of the power conversion apparatus 1 when the output power of the power conversion apparatus 1 is reduced due to power limiting. In this way, an extent to which an input voltage of the DC/AC conversion circuit 12 is increased when the input power of the power conversion apparatus 1 is correspondingly reduced is minimized, preventing the power conversion apparatus 1 from experiencing additional power limiting, and increasing an electric energy yield of the power conversion apparatus 1.

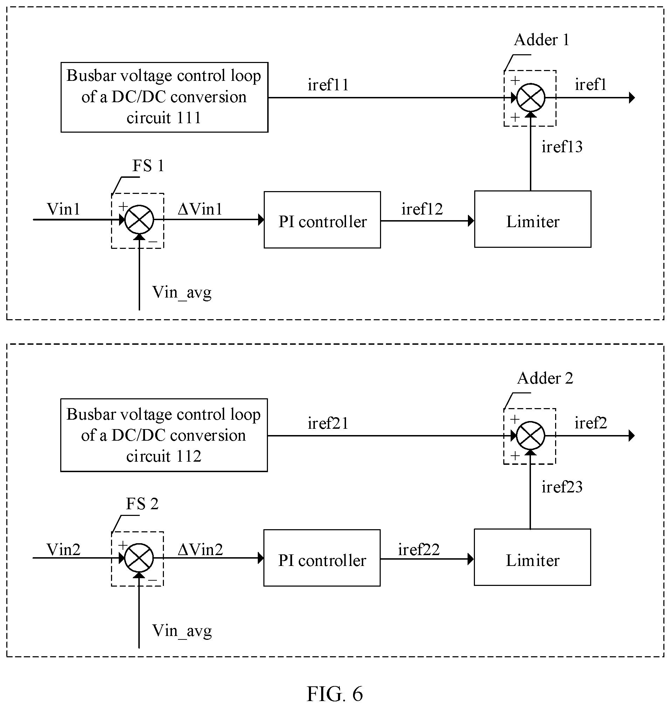

In addition, in the foregoing embodiment, the controller 13 adjusts a target input voltage of each DC/DC conversion circuit by adjusting an input current of each DC/DC conversion circuit to a target input current shown in FIG. 6. As shown in FIG. 6, n is 2, and the controller 13 generates a first target input current iref11 of the DC/DC conversion circuit 111 and a first target input current iref21 of the DC/DC conversion circuit 112 by using a busbar voltage control loop of the DC/DC conversion circuit 111 and a busbar voltage control loop of the DC/DC conversion circuit 112 respectively. When an input current of the DC/DC conversion circuit 111 is iref11 and an input current of the DC/DC conversion circuit 112 is iref21, the input power of the power conversion apparatus 1 is correspondingly reduced when the output power of the power conversion apparatus 1 is reduced due to power limiting. In addition, the controller 13 further inputs, to a subtractor FS 1, the input voltage Vin1 of the DC/DC conversion circuit 111 when the power conversion apparatus 1 is in the non-power-limited state and an average value Vin_avg of the input voltages of the two DC/DC conversion circuits when the power conversion apparatus 1 is in the non-power-limited state, to obtain a difference ΔVin1 between Vin1 and Vin_avg, and obtains a second target input current iref12 of the DC/DC conversion circuit 111 based on ΔVin1 by using a PI controller. Then, iref12 is input to a limiter, and the controller 13 makes, by using the limiter, a third target input current iref13 of the DC/DC conversion circuit 111 greater than or equal to a preset current. Then, the controller 13 obtains a target input current iref1=iref11+iref13 of the DC/DC conversion circuit 111 by using an adder Adder 1. The controller 13 further inputs, to a subtractor FS 2, the input voltage Vin2 of the DC/DC conversion circuit 112 when the power conversion apparatus 1 is in the non-power-limited state and the average value Vin_avg of the input voltages of the two DC/DC conversion circuits when the power conversion apparatus 1 is in the non-power-limited state, to obtain a difference ΔVin2 between Vin2 and Vin_avg, and obtains a second target input current iref22 of the DC/DC conversion circuit 112 based on ΔVin2 by using a PI controller. Then, iref22 is input to a limiter, and the controller 13 makes, by using the limiter, a third target input current iref23 of the DC/DC conversion circuit 112 greater than or equal to the preset current. Then, the controller 13 obtains a target input current iref2=iref21+iref23 of the DC/DC conversion circuit 112 by using an adder Adder 2.

In this application, when the power conversion apparatus 1 switches from the non-power-limited state to the power-limited state, the input voltages of the n DC/DC conversion circuits are adjusted to a higher voltage value, to correspondingly reduce the input power of the power conversion apparatus 1 when the output power of the power conversion apparatus 1 is reduced due to power limiting. In this way, the input voltage of the DC/AC conversion circuit 12 can be increased to a small extent when the power conversion apparatus 1 is in the power-limited state, preventing the power conversion apparatus 1 from experiencing additional power limiting, and increasing the electric energy yield of the power conversion apparatus 1. In addition, an input power control manner provided in this application is applicable to the scenario in which the open-circuit voltages of the plurality of photovoltaic modules connected to the power conversion apparatus 1 are close and the output currents are different, and is further applicable to a scenario in which the open-circuit voltages of the plurality of photovoltaic modules connected to the power conversion apparatus 1 are different. This provides high applicability.

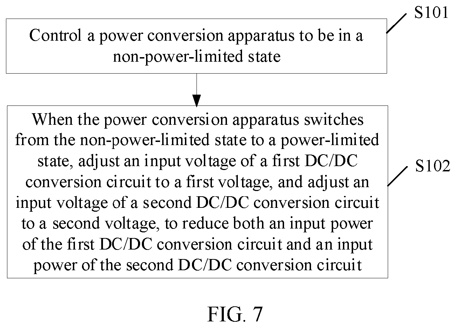

FIG. 7 is a schematic flowchart of a control method of a power conversion apparatus according to this application. The control method of the power conversion apparatus provided in this embodiment of this application is applicable to the power conversion apparatus 1 shown in FIG. 3. The control method of the power conversion apparatus may include the following steps.

S101: Control the power conversion apparatus to be in a non-power-limited state.

Specifically, the power conversion apparatus adjusts an output voltage of a photovoltaic module connected to the power conversion apparatus, to perform MPPT on an output power of the photovoltaic module. In this way, the output power of the photovoltaic module connected to the power conversion apparatus is maximized, and therefore, an output power of the power conversion apparatus is maximized. That is, the power conversion apparatus is in the non-power-limited state.

S102: When the power conversion apparatus switches from the non-power-limited state to a power-limited state, adjust an input voltage of a first DC/DC conversion circuit to a first voltage and adjust an input voltage of a second DC/DC conversion circuit to a second voltage, to reduce both an input power of the first DC/DC conversion circuit and an input power of the second DC/DC conversion circuit.

The first voltage is greater than the input voltage of the first DC/DC conversion circuit when the power conversion apparatus is in the non-power-limited state, and the second voltage is greater than the input voltage of the second DC/DC conversion circuit when the power conversion apparatus is in the non-power-limited state.

In an implementation, when the power conversion apparatus is in the non-power-limited state, the input voltage of the first DC/DC conversion circuit is different from the input voltage of the second DC/DC conversion circuit.

When the power conversion apparatus switches from the non-power-limited state to the power-limited state, the power conversion apparatus adjusts the input voltage of the first DC/DC conversion circuit to the first voltage, adjusts the input voltage of the second DC/DC conversion circuit to the second voltage, and makes a difference between the second voltage and the first voltage less than a difference between the input voltages of the second DC/DC conversion circuit and the first DC/DC conversion circuit when the power converter is in the non-power-limited state, to reduce both the input power of the first DC/DC conversion circuit and the input power of the second DC/DC conversion circuit.

In another implementation, when the power conversion apparatus is in the non-power-limited state, the input voltage of the first DC/DC conversion circuit is the same as the input voltage of the second DC/DC conversion circuit.

When the power conversion apparatus switches from the non-power-limited state to the power-limited state, the power conversion apparatus adjusts the input voltage of the first DC/DC conversion circuit to the first voltage, adjusts the input voltage of the second DC/DC conversion circuit to the second voltage, and makes a difference between the second voltage and the first voltage consistent with a difference between the input voltages of the second DC/DC conversion circuit and the first DC/DC conversion circuit when the power converter is in the non-power-limited state, to reduce both the input power of the first DC/DC conversion circuit and the input power of the second DC/DC conversion circuit.

During specific implementation, for more operations performed by the power conversion apparatus in the control method of the power conversion apparatus provided in this application, refer to the implementations performed by the power conversion apparatus 1 shown in FIG. 3. Details are not described herein again.

In this embodiment of this application, when the power conversion apparatus switches from the non-power-limited state to the power-limited state, an input voltage of each DC/DC conversion circuit inside the power conversion apparatus is adjusted to a higher voltage value, to correspondingly reduce an input power of the power conversion apparatus when the output power of the power conversion apparatus is reduced due to power limiting. In this way, an input voltage of a DC/AC conversion circuit can be increased to a small extent when the input power of the power conversion apparatus is correspondingly reduced, preventing the power conversion apparatus from experiencing additional power limiting, and increasing an electric energy yield of the power conversion apparatus.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power conversion apparatus, wherein the power conversion apparatus comprises a first DC/DC conversion circuit, a second DC/DC conversion circuit, a DC/AC conversion circuit, and a controller;
both an input of the first DC/DC conversion circuit and an input of the second DC/DC conversion circuit are configured to connect to a photovoltaic module, an output of the first DC/DC conversion circuit and an output of the second DC/DC conversion circuit are connected in parallel to each other and then connected to an input of the DC/AC conversion circuit, and an output of the DC/AC conversion circuit is configured to connect to an alternating-current power grid; and
the controller is configured to: when the power conversion apparatus switches from a non-power-limited state to a power-limited state, adjust an input voltage of the first DC/DC conversion circuit to a first voltage and adjust an input voltage of the second DC/DC conversion circuit to a second voltage, to reduce both an input power of the first DC/DC conversion circuit and an input power of the second DC/DC conversion circuit, wherein the first voltage is greater than the input voltage of the first DC/DC conversion circuit when the power conversion apparatus is in the non-power-limited state, and the second voltage is greater than the input voltage of the second DC/DC conversion circuit when the power conversion apparatus is in the non-power-limited state.

2. The power conversion apparatus according to claim 1, wherein when the power conversion apparatus is in the non-power-limited state, the input voltage of the first DC/DC conversion circuit is different from the input voltage of the second DC/DC conversion circuit; and
the controller is configured to: when the power conversion apparatus switches from the non-power-limited state to the power-limited state, adjust the input voltage of the first DC/DC conversion circuit to the first voltage, adjust the input voltage of the second DC/DC conversion circuit to the second voltage, and make a difference between the second voltage and the first voltage less than a difference between the input voltages of the second DC/DC conversion circuit and the first DC/DC conversion circuit when the power converter is in the non-power-limited state.

3. The power conversion apparatus according to claim 1, wherein when the power conversion apparatus is in the non-power-limited state, the input voltage of the first DC/DC conversion circuit is the same as the input voltage of the second DC/DC conversion circuit; and
the controller is configured to: when the power conversion apparatus switches from the non-power-limited state to the power-limited state, adjust the input voltage of the first DC/DC conversion circuit to the first voltage, adjust the input voltage of the second DC/DC conversion circuit to the second voltage, and make a difference between the second voltage and the first voltage consistent with a difference between the input voltages of the second DC/DC conversion circuit and the first DC/DC conversion circuit when the power converter is in the non-power-limited state.

4. The power conversion apparatus according to any one of claims 1 to 3, wherein the controller is configured to: adjust a target input voltage of the first DC/DC conversion circuit to the first voltage and adjust a target input voltage of the second DC/DC conversion circuit to the second voltage, to adjust the input voltage of the first DC/DC conversion circuit to the first voltage and adjust the input voltage of the second DC/DC conversion circuit to the second voltage.

5. A control method of a power conversion apparatus, wherein the method comprises:
when the power conversion apparatus switches from a non-power-limited state to a power-limited state, adjusting an input voltage of a first DC/DC conversion circuit to a first voltage and adjusting an input voltage of a second DC/DC conversion circuit to a second voltage, to reduce both an input power of the first DC/DC conversion circuit and an input power of the second DC/DC conversion circuit, wherein the first voltage is greater than the input voltage of the first DC/DC conversion circuit when the power conversion apparatus is in the non-power-limited state, the second voltage is greater than the input voltage of the second DC/DC conversion circuit when the power conversion apparatus is in the non-power-limited state, the method is applicable to the power conversion apparatus, the power conversion apparatus comprises the first DC/DC conversion circuit, the second DC/DC conversion circuit, and a DC/AC conversion circuit, both an input of the first DC/DC conversion circuit and an input of the second DC/DC conversion circuit are configured to connect to a photovoltaic module, an output of the first DC/DC conversion circuit and an output of the second DC/DC conversion circuit are connected in parallel to each other and then connected to an input of the DC/AC conversion circuit, and an output of the DC/AC conversion circuit is configured to connect to an alternating-current power grid.

6. The method according to claim 5, wherein when the power conversion apparatus is in the non-power-limited state, the input voltage of the first DC/DC conversion circuit is different from the input voltage of the second DC/DC conversion circuit; and
adjusting the input voltage of the first DC/DC conversion circuit to the first voltage and adjusting the input voltage of the second DC/DC conversion circuit to the second voltage comprise:
adjusting the input voltage of the first DC/DC conversion circuit to the first voltage, adjusting the input voltage of the second DC/DC conversion circuit to the second voltage, and making a difference between the second voltage and the first voltage less than a difference between the input voltages of the second DC/DC conversion circuit and the first DC/DC conversion circuit when the power converter is in the non-power-limited state.

7. The method according to claim 5, wherein when the power conversion apparatus is in the non-power-limited state, the input voltage of the first DC/DC conversion circuit is the same as the input voltage of the second DC/DC conversion circuit; and
adjusting the input voltage of the first DC/DC conversion circuit to the first voltage and adjusting the input voltage of the second DC/DC conversion circuit to the second voltage comprise:
adjusting the input voltage of the first DC/DC conversion circuit to the first voltage, adjusting the input voltage of the second DC/DC conversion circuit to the second voltage, and making a difference between the second voltage and the first voltage consistent with a difference between the input voltages of the second DC/DC conversion circuit and the first DC/DC conversion circuit when the power converter is in the non-power-limited state.

8. The method according to any one of claims 5 to 7, wherein adjusting the input voltage of the first DC/DC conversion circuit to the first voltage and adjusting the input voltage of the second DC/DC conversion circuit to the second voltage comprise:
adjusting a target input voltage of the first DC/DC conversion circuit to the first voltage and adjusting a target input voltage of the second DC/DC conversion circuit to the second voltage.
